# EUROPÄISCHE PATENTSCHRIFT

(11) **EP 1 434 654 B1**
(45) Veröffentlichungstag und Bekanntmachung des Hinweises auf die Patenterteilung: **27.07.2005**
(21) Anmeldenummer: 02781225.4
(22) Anmeldetag: 07.10.2002
(51) Int. Cl.: B02C 18/18

(54) **FRÄSZAHN SOWIE FRÄSZAHNHALTER FÜR EINE ZERKLEINERUNGSMASCHINE**
MILLING TOOTH AND MILLING TOOTH HOLDER FOR A COMMINUTION MACHINE
DENT DE FRAISAGE ET SUPPORT DE DENT DE FRAISAGE POUR BROYEUSE

(30) Priorität: 05.10.2001 DE 20116344 U
(43) Veröffentlichungstag der Anmeldung: 07.07.2004
(73) Patentinhaber: FAE ITALIA S.r.l., 38013 Fondo (Trento) (IT)
(72) Erfinder: PIZZUTO, Gianfranco, I-38013 Fondo (IT)
(74) Vertreter: Zeitler, Giselher, Dipl.-Ing.
(86) Internationale Anmeldenummer: PCT/EP2002/011227
(87) Internationale Veröffentlichungsnummer: WO 2003/031069

(56) Entgegenhaltungen:
- US-A- 1 543 515
- US-A- 3 642 214
- US-A- 4 261 619

## Beschreibung

Die vorliegende Erfindung betrifft einen Fräszahn für eine Zerkleinerungsmaschine, gemäß dem Oberbegriff des Anspruchs 1, einen Fräszahnhalter gemäß dem Oberbegriff des Anspruchs 16 und eine Zerkleinerungsmaschine gemäß dem Oberbegriff des Anspruchs 17.

Fräszähne in Form von Schlegelmessern oder ähnlichem für Bodenbearbeitungsmaschinen, wie beispielsweise Mäher, Häcksler oder Mulcher, sind beispielsweise aus US 4261619, US 3 678 671, DE 199 51 086 oder EP 0 182 122 bekannt. Diese Fräszähne werden in der Regeln federnd an einer rotierenden Trommel gelagert, so daß plötzliche mechanische Einwirkungen bzw. Stöße aufgrund von Steinen oder ähnlichem nicht zu einer sofortigen Zerstörung der betroffenen Fräszähne führen. Die gewünschte Wirkung besonders bei harten Materialien, wie beispielsweise Holz, ist jedoch wegen der Federung begrenzt.

Der Erfindung liegt die Aufgabe zugrunde, einen Fräszahn, einen Fräszahnhalter bzw. eine Zerkleinerungsmaschine der o.g. Art bzgl. des Verhältnisses von Kosten zu Standzeit, d.h. bzgl. der Wirtschaftlichkeit, zu verbessern.

Diese Aufgabe wird erfindungsgemäß mit einem Fräszahn der o.g. Art mit den in Anspruch 1 gekennzeichneten Merkmalen, durch einen Fräszahnhalter der o.g. Art mit den in Anspruch 16 gekennzeichneten Merkmalen sowie durch eine Zerkleinerungsmaschine der o.g. Art mit den in Anspruch 17 gekennzeichneten Merkmalen gelöst. Vorteilhafte Ausgestaltungen der Erfindung sind in den weiteren Ansprüchen beschrieben.

Bei einem Fräszahn der o.g. Art ist es erfindungsgemäß vorgesehen, daß die Flanschseite am Fräszahnkörper bzgl. der Bearbeitungsseite gegenüberliegend ausgebildet ist, daß eine gesamte Seite des Fräszahnkörpers, welche in Bearbeitungsrichtung gerichtet ist, als Bearbeitungsseite ausgebildet ist, daß der Fräszahnkopf die Flanschseite in Richtung einer Längsachse des Fräszahnkörpers senkrecht zur Bearbeitungsrichtung überragt und daß ein erster Abschnitt des Fräszahnkörpers die Flanschseite in eine Richtung parallel und entgegengesetzt zur Bearbeitungsrichtung überragt.

Bei einem Fräszahnhalter der o.g. Art ist es erfindungsgemäß vorgesehen, daß dieser eine in Bearbeitungsrichtung weisende Flanschseite zum Befestigen des Fräszahnes mit einer Erhebung aufweist sowie benachbart zur Flanschseite einen ebenen Abschnitt derart aufweist, daß sich der erste Abschnitt des Fräszahnes auf diesem ebenen Abschnitt abstützt.

Dies hat den Vorteil, daß in überraschender Weise eine besonders hohe Standzeit des Fräszahnes erzielt wird. Mittels des die Flanschseite in eine Richtung parallel und entgegengesetzt zur Bearbeitungsrichtung überragenden Abschnitts stützt sich der Fräszahn auf dem Fräszahnhalter ab. Gleichzeitig sind besonders hohe Scherkräfte im Bereich unterhalb des überragenden Abschnittes vermieden, da auf der Bearbeitungsseite der gesamte Fräszahnkörper mit Kräften beaufschlagt ist und nicht lediglich der Bereich des überragenden Fräszahnkopfes oberhalb des Fräszahnfußes. Durch die erfindungsgemäße Anordnung und Ausbildung der Flanschseite von Fräszahn bzw. Fräszahnhalter wird eine besonders gute und gleichmäßige Ableitung von Kräften von dem Fräszahn auf den Fräszahnhalter erreicht, wobei Druckspitzen im Fräszahnkörper vor allem am Übergang vom Fräszahnfuß in den Fräszahnkopf vermieden sind.

Zweckmäßigerweise ist der die Flanschseite in eine Richtung parallel und entgegengesetzt zur Bearbeitungsrichtung überragende Abschnitt ein Teil des Fräszahnkopfes.

Eine größere Festigkeit und Haltbarkeit des Fräszahnes erzielt man dadurch, daß der Fräszahnkopf eine geringer Breite aufweist als der Fräszahnfuß.

Eine größtmögliche Anlagefläche zwischen Fräszahnkörper und Fräszahnhalter mit geringem seitlichen Spiel erzielt man dadurch, daß an der Flanschseite eine ovale Ausnehmung zum Eingriff einer ovalen Erhebung des Fräszahnhalters ausgebildet ist.

In einer besonders bevorzugten Ausführungsform ist ausgehend von der Schneideinrichtung in Richtung Fräszahnfuß ein vorbestimmter zweiter Abschnitt der Bearbeitungsseite des Fräszahnkopfes linear ausgebildet und um einen vorbestimmten ersten Winkel, beispielsweise 10 Grad bis 14 Grad, insbesondere 12 Grad, bzgl. einer Längsachse des Fräszahnkörpers verkippt. An der Bearbeitungsseite des Fräszahnkörpers ist zwischen dem Fräszahnfuß und dem zweiten Abschnitt ein dritter Abschnitt mit vorbestimmter Krümmung, beispielsweise mit einem Krümmungsradius von 50 mm bis 70 mm, insbesondere 60 mm, ausgebildet ist. Eine Teilungsebene zwischen Fräszahnfuß und Fräszahnkopf ist bzgl. einer Längsachse des Fräszahnkörpers um einen vorbestimmten zweiten Winkel von beispielsweise 90 Grad bis 110 Grad, insbesondere 100 Grad, verkippt ist. Der erste Abschnitt überragt die Flanschseite um 30 mm bis 40 mm, insbesondere um 33,4 mm. Der Fräszahnkopf überragt die Flanschseite um 60 mm bis 90 mm, insbesondere um 78 mm. Der erste Abschnitt weist eine Höhe von 20 mm bis 40 mm, insbesondere von 29,5 mm, auf. Der Fräszahnkopf weist eine Breite von 15 mm bis 30 mm, insbesondere von 23 mm, auf. Der Fräszahnfuß weist eine Breite von 50 mm bis 60 mm, insbesondere von 55 mm, auf.

Die Erfindung wird im folgenden anhand der Zeichnung näher erläutert. Diese zeigt in:
- Fig. 1: eine bevorzugte Ausführungsform eines erfindungsgemäßen Fräszahnes in Seitenansicht,

- Fig. 2: den Fräszahn gemäß Fig. 1 in einer Ansicht in Richtung Pfeil B von Fig. 1,
- Fig. 3: den Fräszahn gemäß Fig. 1 in einer Schnittansicht entlang Linie A-A von Fig. 2,
- Fig. 4: einen Fräszahnhalter für den Fräszahn gemäß Fig. 1 bis 3 in Seitenansicht,
- Fig. 5: den Fräszahnhalter gemäß Fig. 4 in einer Ansicht in Richtung Pfeil C von Fig. 4,
- Fig. 6: den Fräszahnhalter gemäß Fig. 4 in einer Schnittansicht entlang Linie D-D von Fig. 5 und
- Fig. 7: einen Fräszahn mit Fräszahnhalter in perspektivischer Explosionsdarstellung.

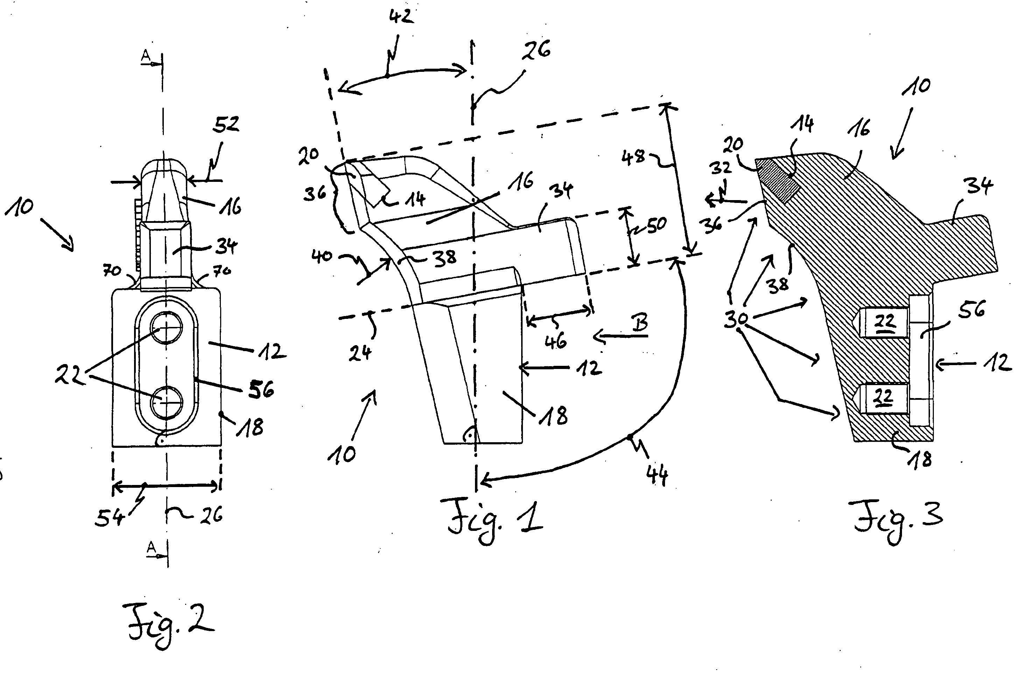

Die in Fig. 1 bis 3 dargestellte bevorzugte Ausführungsform eines erfindungsgemäßen Fräszahnes 10 für eine in der Gesamtheit nicht dargestellten Zerkleinerungsmaschine umfaßt einen Fräszahnkörper mit einer Flanschseite 12 zum lösbaren Verbinden mit einem Fräszahnhalter der Zerkleinerungsmaschine, eine Ausnehmung 14, einen ausnehmungsseitigen Fräszahnkopf 16 sowie an einem dem Fräszahnkopf 16 abgewandten Ende einen Fräszahnfuß 18. In der Ausnehmung 14 ist eine Schneideinrichtung 20 in Form von zwei Hartmetallteilen angeordnet. Diese Hartmetallteilen sind beispielsweise in die Ausnehmung 14 eingelötet. Von der Flanschseite 12 aus zugänglich sind im Fräszahnkörper zwei Gewindebohrungen 22 ausgebildet, mittels derer eine verspannte Befestigung mit dem Fräszahnhalter erfolgt. Hierzu greift jeweils eine Schraube durch den Fräszahnhalter in die Gewindebohrung 22, wie später im Detail in Bezug auf Fig. 7 erläutert wird.

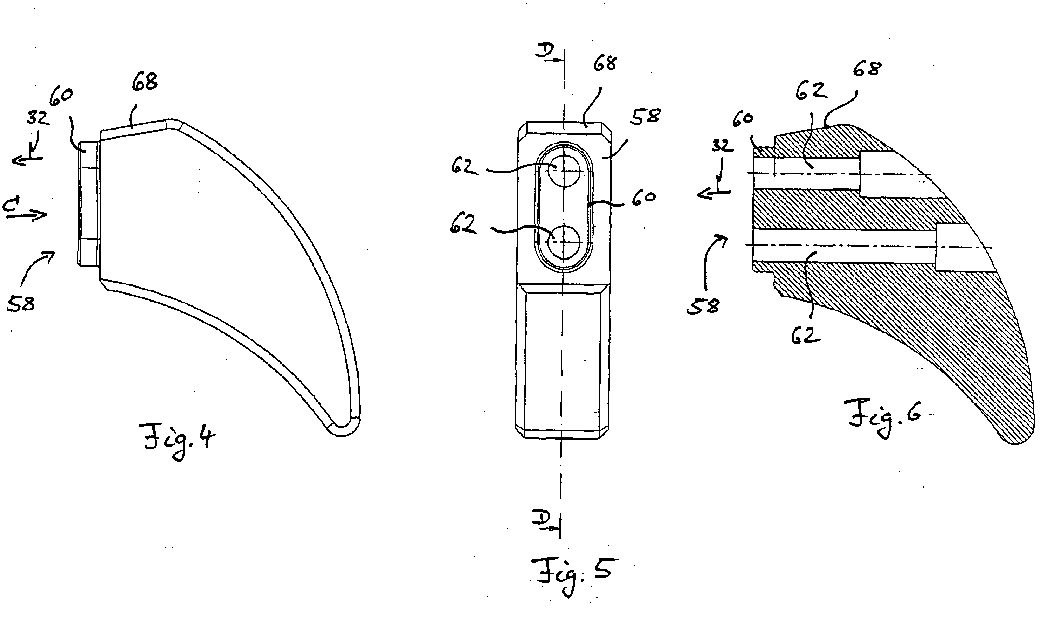

Der Fräszahnkopf 16 ist von dem Fräszahnfuß 18 durch eine Trennebene 24 getrennt. Mit 26 ist eine Längsachse des Fräszahnkörpers bezeichnet. Diese steht senkrecht auf einem Boden 28 des Fräszahnfußes 18. Der Fräszahnkopf 16 ist schmäler ausgebildet als der Fräszahnfuß 18 (vgl. Fig. 2). Der Fräszahnkörper weist eine Bearbeitungsseite 30 auf, die in eine Bearbeitungsrichtung 32 gerichtet ist. Die Flanschseite 12 ist am Fräszahnkörper bzgl. der Bearbeitungsseite 30 gegenüberliegend ausgebildet. Die gesamte, in Bearbeitungsrichtung weisende Seite 30 des Fräszahnkörpers ist als Bearbeitungsseite ausgebildet. Der Fräszahnkopf 16 überragt die Flanschseite 12 ausgehend von der Trennebene 24 in Richtung der Längsachse 26, welche senkrecht zur Bearbeitungsrichtung 32 gerichtet ist. Ein erster Abschnitt 34 des Fräszahnkörpers überragt die Flanschseite 12 entgegen der Bearbeitungsrichtung 32. An der Bearbeitungsseite 30 ist ausgehend von der Schneideinrichtung 20 ein ebener bzw. linearer zweiter Abschnitt 36 ausgebildet, an den sich ein gekrümmter dritter Abschnitt 38 mit vorbestimmten Krümmungsradius 40 bis zur Trennebene 24 anschließt.

In der dargestellten Ausführungsform ist der zweite Abschnitt 36 der Bearbeitungsseite 30 des Fräszahnkopfes 26 um einen vorbestimmten ersten Winkel 42 von 12 Grad bzgl. der Längsachse 26 des Fräszahnkörpers verkippt. Der dritte Abschnitt 38 weist einen Krümmungsradius von 60 mm auf. Die Teilungsebene 24 zwischen Fräszahnfuß 18 und Fräszahnkopf 16 ist bzgl. der Längsachse 26 um einen vorbestimmten zweiten Winkel 44 von 100 Grad verkippt. Der erste Abschnitt 34 überragt die Flanschseite 12 um eine Länge 46 von 33,4 mm. Der Fräszahnkopf 16 überragt die Flanschseite 12 um eine Länge 48 von 78 mm. Der erste Abschnitt 34 weist eine Höhe 50 von 29,5 mm auf. Der Fräszahnkopf 16 weist eine Breite 52 von 23 mm auf. Der Fräszahnfuß 18 weist eine Breite 54 von 55 mm auf.

Durch die erfindungsgemäße Ausgestaltung des Fräszahnes 10 werden Scherkräfte im Fräszahnkörper im Bereich des Übergangs von Fräszahnkopf 16 zu Fräszahnfuß 18, d.h. im Bereich der Trennebene 24, vermieden. Statt dessen stützt sich der Fräszahn 10 mit dem ersten Abschnitt 34 auf dem Fräszahnhalter ab. Gleichzeitig ist auch eine in Bearbeitungsrichtung 32 weisende Stirnfläche des Fräszahnfußes 18 als Teil der Bearbeitungsfläche 30 des Fräszahnkörpers ausgebildet, so daß eine mechanisch Belastung des Fräszahnes 10 auf die gesamte Fläche 30 und somit auf den gesamten Fräszahnkörper wirkt und nicht lediglich auf den Fräszahnkopf 16. Gleichzeitig wird der Fräszahnhalter in Bearbeitungsrichtung 32 vollständig vom Fräszahn 10 überdeckt, so daß der Fräszahnhalter vor direkter mechanischer Krafteinwirkung bzw. Belastung geschützt.

Zusätzlich weist der Fräszahn 10 auf der Flanschseite 12 im Bereich der Gewindebohrungen 22 eine ovale Ausnehmung 56 auf, die zusätzlich stabilisierend mit einer Flanschseite des Fräszahnhalters zusammen wirkt, wie nachfolgend noch näher beschrieben wird.

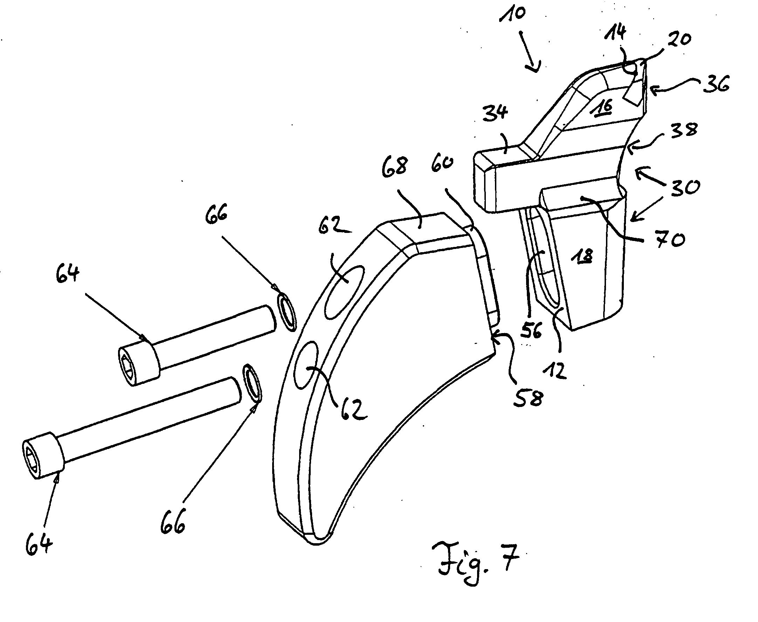

Fig. 4 bis 6 veranschaulichen eine bevorzugte Ausführungsform eines zu dem oben beschriebenen Fräszahn 10 passenden Fräszahnhalters. Dieser weist eine Flanschseite 58 mit einer der ovalen Ausnehmung 56 der Flanschseite 12 des Fräszahnes 10 entsprechenden ovalen Erhebung 60. Der Fräszahnhalter weist zwei Durchgangsbohrungen 62 auf, die mit den Gewindebohrungen 22 des Fräszahnes 10 fluchten.

Fig. 7 illustriert einen Zusammenbau von Fräszahnhalter und Fräszahn 10. Der Fräszahn 10 wird auf den Fräszahnhalter aufgesteckt, so daß die jeweiligen Flanschseiten 12 und 58 aufeinander stoßen und die Erhebung 60 des Fräszahnhalters in die Ausnehmung 56 des Fräszahnes 10 eingreift. Durch die Bohrungen 62 werden Schrauben 64 mit Beilagscheiben 66 gesteckt und in die Gewindebohrungen 22 (siehe Fig. 2, 3) des Fräszahnes 10 eingeschraubt. Der erste Abschnitt 34 liegt dann auf einem eben Abschnitt 68 des Fräszahnhalters auf, so daß sich der Fräszahn 10 auf dem Fräszahnhalter abstützt.

Wie insbesondere aus Fig. 2 und 7 ersichtlich, ist im Bereich des Übergangs zwischen Fräszahnkopf 16 und Fräszahnfuß 18 eine Verstärkung 70 befestigt, beispielsweise eine Schweißnaht oder ein zusätzlich befestigtes Formteil. Dieses liefert eine zusätzliche mechanische Stabilität im Bereich der Trennebene 24 (siehe Fig. 1) zwischen Fräszahnkopf 16 und Fräszahnfuß 18.

## Patentansprüche

1. Fräszahn (10) für eine Zerkleinerungsmaschine, insbesondere für ein Forstgerät, einen Mulcher, eine Schreddervorrichtung, einen Häcksler oder eine Bodenbarbeitungsmaschine, mit einem Fräszahnkörper, welcher folgendes aufweist, eine Bearbeitungsseite (30), die in eine Bearbeitungsrichtung (32) gerichtet ist, eine Flanschseite (12) zum lösbaren Verbinden mit einem Fräszahnhalter der Zerkleinerungsmaschine, eine Ausnehmung (14), einen ausnehmungsseitigen Fräszahnkopf (16) sowie an einem dem Fräszahnkopf (16) abgewandten Ende einen Fräszahnfuß (18), wobei in der Ausnehmung (14) eine Schneideinrichtung (20) angeordnet ist,
**dadurch gekennzeichnet,**
**daß** die Flanschseite (12) am Fräszahnkörper bzgl. der Bearbeitungsseite (30) gegenüberliegend ausgebildet ist, daß eine gesamte Seite (30) des Fräszahnkörpers, welche in Bearbeitungsrichtung (32) gerichtet ist, als Bearbeitungsseite (30) ausgebildet ist, daß der Fräszahnkopf (16) die Flanschseite (12) in Richtung einer Längsachse (26) des Fräszahnkörpers senkrecht zur Bearbeitungsrichtung (32) überragt und daß ein erster Abschnitt (34) des Fräszahnkörpers die Flanschseite (12) in eine Richtung parallel und entgegengesetzt zur Bearbeitungsrichtung (32) überragt.

2. Fräszahn (10) nach Anspruch 1, **dadurch gekennzeichnet, daß** der die Flanschseite (12) in eine Richtung parallel und entgegengesetzt zur Bearbeitungsrichtung (32) überragende erste Abschnitt (34) ein Teil des Fräszahnkopfes (16) ist.

3. Fräszahn (10) nach Anspruch 1 oder 2, **dadurch gekennzeichnet, daß** der Fräszahnkopf (16) eine geringer Breite (52) aufweist als der Fräszahnfuß (18).

4. Fräszahn (10) nach wenigstens einem der vorhergehenden Ansprüche, **dadurch gekennzeichnet, daß** an der Flanschseite (12) eine ovale Ausnehmung (56) zum Eingriff einer ovalen Erhebung (60) des Fräszahnhalters ausgebildet ist.

5. Fräszahn (10) nach wenigstens einem der vorhergehenden Ansprüche, **dadurch gekennzeichnet, daß** ausgehend von der Schneideinrichtung (20) in Richtung Fräszahnfuß (18) ein vorbestimmter zweiter Abschnitt (36) der Bearbeitungsseite (30) des Fräszahnkopfes (18) linear ausgebildet und um einen vorbestimmten ersten Winkel (42) bzgl. einer Längsachse (26) des Fräszahnkörpers verkippt ist.

6. Fräszahn (10) nach Anspruch 5, **dadurch gekennzeichnet, daß** der vorbestimmte erste Winkel (42) 10 Grad bis 14 Grad, insbesondere 12 Grad, beträgt.

7. Fräszahn (10) nach Anspruch 5 oder 6, **dadurch gekennzeichnet, daß** an der Bearbeitungsseite (30) des Fräszahnkörpers zwischen dem Fräszahnfuß (18) und dem zweiten Abschnitt (36) ein dritter Abschnitt (38) mit vorbestimmter Krümmung ausgebildet ist.

8. Fräszahn (10) nach Anspruch 7, **dadurch gekennzeichnet, daß** die vorbestimmte Krümmung des dritten Abschnitts (38) einen Krümmungsradius (40) von 50 mm bis 70 mm, insbesondere 60 mm, aufweist.

9. Fräszahn (10) nach wenigstens einem der vorhergehenden Ansprüche, **dadurch gekennzeichnet, daß** eine Teilungsebene (24) zwischen Fräszahnfuß (18) und Fräszahnkopf (16) bzgl. einer Längsachse (26) des Fräszahnkörpers um einen vorbestimmten zweiten Winkel (44) verkippt ist.

10. Fräszahn (10) nach Anspruch 9, **dadurch gekennzeichnet, daß** der vorbestimmte zweite Winkel (44) 90 Grad bis 110 Grad, insbesondere 100 Grad, beträgt.

11. Fräszahn (10) nach wenigstens einem der vorhergehenden Ansprüche, **dadurch gekennzeichnet, daß** der erste Abschnitt (34) die Flanschseite (12) um 30 mm bis 40 mm, insbesondere um 33,4 mm, überragt.

12. Fräszahn (10) nach wenigstens einem der vorhergehenden Ansprüche, **dadurch gekennzeichnet, daß** der Fräszahnkopf (16) die Flanschseite (12) um 60 mm bis 90 mm, insbesondere um 78 mm, überragt.

13. Fräszahn (10) nach wenigstens einem der vorhergehenden Ansprüche, **dadurch gekennzeichnet, daß** der erste Abschnitt (34) eine Höhe von 20 mm bis 40 mm, insbesondere von 29,5 mm, aufweist.

14. Fräszahn (10) nach wenigstens einem der vorhergehenden Ansprüche, **dadurch gekennzeichnet, daß** der Fräszahnkopf (16) eine Breite (52) von 15 mm bis 30 mm, insbesondere von 23 mm, aufweist.

15. Fräszahn nach wenigstens einem der vorhergehenden Ansprüche, **dadurch gekennzeichnet, daß** der Fräszahnfuß (18) eine Breite (54) von 50 mm bis 60 mm, insbesondere von 55 mm, aufweist.

16. Fräszahnhalter für eine Zerkleinerungsmaschine, insbesondere für ein Forstgerät, einen Mulcher, eine Schreddervorrichtung, einen Häcksler oder eine Bodenbarbeitungsmaschine, zum Aufnehmen eines Fräszahnes (10) gemäß wenigstens einem der Ansprüche 1 bis 15,
**dadurch gekennzeichnet,**
**daß** der Fräszahnhalter eine in Bearbeitungsrichtung (32) weisende Flanschseite (58) zum Befestigen des Fräszahnes (10) mit einer Erhebung (60) aufweist sowie benachbart zur Flanschseite (58) einen ebenen Abschnitt (68) derart aufweist, daß sich der erste Abschnitt (34) des Fräszahnes (10) auf diesem ebenen Abschnitt (68) abstützt.

17. Zerkleinerungsmaschine, insbesondere Forstgerät, Mulcher, Schreddervorrichtung, Häcksler oder Bodenbarbeitungsmaschine, mit einer drehbaren Walze, auf der wenigstens ein Fräszahnhalter zum Aufnehmen eines Fräszahnes (10) befestigt ist,
**dadurch gekennzeichnet,**
**daß** der Fräszahn (10) gemäß einem der Ansprüche 1 bis 15 und der Fräszahnhalter gemäß dem Anspruch 16 ausgebildet sind.

## Claims

1. Cutting tooth (10) for a comminuting machine and in particular for a machine for forestry, a mulcher, a shredder, a forage cutter or a machine for working the soil, having a cutting-tooth body which has the following: a working side (30) which is directed in a working direction (32), a flange side (12) for detachable connection to a cutting-tooth holder of the comminuting machine, a recess (14), a cutting-tooth head (16) at the same end as the recess (14) and, at an end remote from the cutting-tooth head (16), a cutting-tooth foot (18), a cutting means (20) being arranged in the recess (14), **characterised in that** the flange side (12) is formed on the cutting-tooth body to be opposite from the working side (30), **in that** one complete side (30) of the cutting-tooth body, which side (30) is directed in the working direction (32), is in the form of a working side (30), **in that** the cutting-tooth head (16) projects beyond the flange side (12) in the direction of a longitudinal axis (26) of the cutting tooth body, perpendicularly to the working direction (32), and **in that** a first portion (34) of the cutting-tooth body projects beyond the flange side (12) in a direction parallel to and opposite from the working direction (32).

2. Cutting tooth (10) according to claim 1, **characterised in that** the first portion (34) which projects beyond the flange side (12) in a direction parallel to and opposite from the working direction (32) is part of the cutting-tooth head (16).

3. Cutting tooth (10) according to claim 1 or 2, **characterised in that** the width (52) of the cutting-tooth head (16) is smaller than that of the cutting-tooth foot (18).

4. Cutting tooth (10) according to at least one of the foregoing claims, **characterised in that** there is formed on the flange side (12) an oval recess (56) to engage with an oval elevation (60) on the cutting-tooth holder.

5. Cutting tooth (10) according to at least one of the foregoing claims, **characterised in that** a predetermined second portion (36) of the working side (30) of the cutting-tooth head (18) is of a linear configuration, starting from the cutting means (20) and running in the direction of the cutting-tooth foot (18), and is tilted at a predetermined first angle (42) to a longitudinal axis (26) of the cutting-tooth body.

6. Cutting tooth (10) according to claim 5, **characterised in that** the predetermined first angle (42) is 10° to 14° and in particular 12°.

7. Cutting tooth (10) according to claim 5 or 6, **characterised in that** a third portion (38), of predetermined curvature, is formed on the working side (30) of the cutting-tooth body between the cutting-tooth foot (18) and the second portion (36).

8. Cutting tooth (10) according to claim 7, **characterised in that** the radius of curvature (40) of the predetermined curvature of the third portion (38) is from 50 mm to 70 mm and is in particular 60 mm.

9. Cutting tooth (10) according to at least one of the foregoing claims, **characterised in that** a plane of division (24) between the cutting-tooth foot (18) and the cutting-tooth head (16) is tilted at a predetermined second angle (44) to a longitudinal axis (26) of the cutting-tooth body.

10. Cutting tooth (10) according to claim 9, **characterised in that** the predetermined second angle (44) is 90° to 110° and in particular 100°.

11. Cutting tooth (10) according to at least one of the foregoing claims, **characterised in that** the first portion (34) projects beyond the flange side (12) by 30 mm to 40 mm and in particular by 33.4 mm.

12. Cutting tooth (10) according to at least one of the foregoing claims, **characterised in that** the cutting-tooth head (16) projects beyond the flange side (12) by 60 mm to 90 mm and in particular by 78 mm.

13. Cutting tooth (10) according to at least one of the foregoing claims, **characterised in that** the height of the first portion (34) is from 20 mm to 40 mm and in particular is 29.5 mm.

14. Cutting tooth (10) according to at least one of the foregoing claims, **characterised in that** the width (52) of the cutting-tooth head (16) is from 15 mm to 30 mm and in particular is 23 mm.

15. Cutting tooth (10) according to at least one of the foregoing claims, **characterised in that** the width (54) of the cutting-tooth foot (18) is from 50 mm to 60 mm and in particular is 55 mm.

16. Cutting-tooth holder for a comminuting machine and in particular for a machine for forestry, a mulcher, a shredder, a forage cutter or a machine for working the soil, for receiving a cutting tooth (10) according to at least one of claims 1 to 15, **characterised in that** the cutting-tooth holder has a flange side (58), facing in the working direction (32) and for the attachment of the cutting tooth (10), having an elevation (60) and, adjacent to the flange side (58), the cutting-tooth holder has a plane portion (68) such that the first portion (34) of the cutting tooth (10) is supported on said plane portion (68).

17. Comminuting machine and in particular a machine for forestry, mulcher, shredder, a forage cutter or a machine for working the soil, having a rotatable roller to which at least one cutting-tooth holder for receiving a cutting tooth (10) is attached, **characterised in that** the cutting tooth (10) is formed in accordance with one of claims 1 to 15 and the cutting-tooth holder is formed in accordance with claim 16.

## Revendications

1. Dent de fraisage (10) pour une broyeuse, en particulier pour un appareil de sylviculture, un coupe-écorce, un appareil de déchiquetage, une hacheuse ou une machine à travailler le sol, comportant un corps de dent de fraisage qui comprend les éléments suivants : un côté usinage (30) qui est dirigé dans une direction d'usinage (32), un côté bride (12) pour la jonction détachable avec un support de dent de fraisage de la broyeuse, un évidement (14), une tête de dent de fraisage (16) côté évidement ainsi qu'un pied de dent de fraisage (18) à une extrémité détournée de la tête de dent de fraisage (16), un dispositif de coupe (20) étant agencé dans l'évidement (14),
**caractérisée en ce que**
le côté bride (12) est réalisé sur le corps de dent de fraisage ou à l'opposé du côté usinage (30), **en ce que** tout un côté (30) du corps de dent de fraisage, qui est dirigé en direction d'usinage (32), est réalisé sous forme de côté usinage (30), **en ce que** la tête de dent de fraisage (16) dépasse au-delà du côté bride (12) en direction d'un axe longitudinal (26) du corps de dent de fraisage perpendiculairement à la direction d'usinage (32), et **en ce qu'**un premier tronçon (34) du corps de dent de fraisage dépasse au-delà du côté bride (12) dans une direction parallèle et inverse à la direction d'usinage (32).

2. Dent de fraisage (10) selon la revendication 1, **caractérisée en ce que** le premier tronçon (34) dépassant au-delà du côté bride (12) dans une direction parallèle et inverse à la direction d'usinage (32) fait partie de la tête de dent de fraisage (16).

3. Dent de fraisage (10) selon l'une ou l'autre des revendications 1 et 2, **caractérisée en ce que** la tête de dent de fraisage (16) présente une largeur (52) inférieure à celle du pied de dent de fraisage (18).

4. Dent de fraisage (10) selon l'une des revendications précédentes, **caractérisée en ce qu'**un évidement ovale (56) est ménagé sur le côté bride (12) pour l'engagement d'un bossage ovale (60) du support de dent de fraisage.

5. Dent de fraisage (10) selon l'une des revendications précédentes, **caractérisée en ce qu'**un deuxième tronçon prédéterminé (36) du côté usinage (30) de la tête de dent de fraisage (18) est réalisé linéairement à partir du dispositif de coupe (20) en direction du pied de dent de fraisage (18), qui est basculé d'un premier angle prédéterminé (42) par rapport à un axe longitudinal (26) du corps de dent de fraisage.

6. Dent de fraisage (10) selon la revendication 5, **caractérisée en ce que** le premier angle prédéterminé (42) est de 10° à 14°, en particulier de 12°.

7. Dent de fraisage (10) selon l'une ou l'autre des revendications 5 et 6, **caractérisée en ce qu'**un troisième tronçon (38) présentant une courbure prédéterminée est réalisé sur le côté usinage (30) du corps de dent de fraisage entre le pied de dent de fraisage (18) et le deuxième tronçon (36).

8. Dent de fraisage (10) selon la revendication 7, **caractérisée en ce que** la courbure prédéterminée du troisième tronçon (38) présente un rayon de courbure (40) de 50 mm à 70 mm, en particulier de 60 mm.

9. Dent de fraisage (10) selon l'une des revendications précédentes, **caractérisée en ce qu'**un plan de division (24) entre le pied de dent de fraisage (18) et la tête de dent de fraisage (16) est basculé d'un deuxième angle prédéterminé (44) par rapport à un axe longitudinal (26) du corps de dent de fraisage.

10. Dent de fraisage (10) selon la revendication 9, **caractérisée en ce que** le deuxième angle prédéterminé (44) est de 90° à 110°, en particulier de 100°.

11. Dent de fraisage (10) selon l'une des revendications précédentes, **caractérisée en ce que** le premier tronçon (34) dépasse de 30 mm à 40 mm, en particulier de 33,4 mm, au-delà du côté bride (12).

12. Dent de fraisage (10) selon l'une des revendications précédentes, **caractérisée en ce que** la tête de dent de fraisage (16) dépasse de 60 mm à 90 mm, en particulier de 78 mm, au-delà du côté bride (12).

13. Dent de fraisage (10) selon l'une des revendications précédentes, **caractérisée en ce que** le premier tronçon (34) présente une hauteur de 20 mm à 40 mm, en particulier de 29,5 mm.

14. Dent de fraisage (10) selon l'une des revendications précédentes, **caractérisée en ce que** la tête de dent de fraisage (16) présente une largeur (52) de 15 mm à 30 mm, en particulier de 23 mm.

15. Dent de fraisage (10) selon l'une des revendications précédentes, **caractérisée en ce que** le pied de dent de fraisage (18) présente une largeur (54) de 50 mm à 60 mm, en particulier de 55 mm.

16. Support de dent de fraisage pour une broyeuse, en particulier pour un appareil de sylviculture, un coupe-écorce, un appareil de déchiquetage, une hacheuse ou une machine à travailler le sol, destiné à recevoir une dent de fraisage (10) selon l'une des revendications 1 à 15, **caractérisé en ce que** le support de dent de fraisage comprend un côté bride (58) dirigé en direction d'usinage (32) et destiné à fixer la dent de fraisage (10) avec un bossage (60), ainsi qu'un tronçon plan (68) au voisinage du côté bride (58), de telle sorte que le premier tronçon (34) de la dent de fraisage (10) prend appui sur ce tronçon plan (68).

17. Broyeuse, en particulier appareil de sylviculture, coupe-écorce, appareil de déchiquetage, hacheuse ou machine à travailler le sol, comportant un rouleau tournant sur lequel est fixé au moins un support de dent de fraisage pour recevoir une dent de fraisage (10), **caractérisé(e) en ce que** la dent de fraisage (10) est réalisée selon l'une des revendications 1 à 15 et le support de dent de fraisage est réalisé selon la revendication 16.
